**Europäisches Patentamt**

**European Patent Office**

**Office européen des brevets**

(19)

(11) Veröffentlichungsnummer: **0 060 410 B2**

(12) # NEUE EUROPÄISCHE PATENTSCHRIFT

(45) Veröffentlichungstag der neuen Patentschrift:
**10.07.91 Patentblatt 91/28**

(51) Int. Cl.⁵ : **C05F 9/02, A01C 3/02**

(21) Anmeldenummer: **82101327.3**

(22) Anmeldetag: **22.02.82**

(54) **Maschine zum Umsetzen und Belüften sowie Anlage zum Kompostieren von Müll.**

(30) Priorität: **06.03.81 CH 1557/81**

(43) Veröffentlichungstag der Anmeldung:
**22.09.82 Patentblatt 82/38**

(45) Bekanntmachung des Hinweises auf die
Patenterteilung:
**08.08.84 Patentblatt 84/32**

(45) Bekanntmachung des Hinweises auf die
Entscheidung über den Einspruch:
**10.07.91 Patentblatt 91/28**

(84) Benannte Vertragsstaaten:
**AT DE FR IT**

(56) Entgegenhaltungen:
**EP-A- 0 021 064
CH-A- 466 800**

(56) Entgegenhaltungen:
**DE-A- 1 917 268
DE-B- 1 782 606
FR-A- 2 255 273
FR-A- 2 356 613
GB-A- 872 066
US-A- 1 827 358
US-A- 3 357 813
US-A- 3 776 528**

(73) Patentinhaber: **W + E UMWELTTECHNIK AG
Max-Högger-Strasse 6
CH-8048 Zürich (CH)**

(72) Erfinder: **Künzli, Max
Im Vogelsang 6
CH-5623 Boswil (CH)**

(74) Vertreter: **Meyer, Reinhard, Dipl.-Ing.
c/o Dr. A. R. Egli & Co. Patentanwälte
Horneggstrasse 4
CH-8008 Zürich (CH)**

EP 0 060 410 B2

## Beschreibung

Die Erfindung betrifft eine Maschine zum Aufnehmen, Umsetzen und Verteilen von Müll auf einem Kompostierfeld nach dem Obergegriff des Patentanspruches 1 sowie eine Aulage hierzu.

Die Kompostierung stellt neben der Verbrennung und der Deponie eine weitere Möglichkeit zur Müllbeseitigung dar und ist seit langem bekannt. Da die Kompostierung ein biologischer Vorgang ist, mit dem sich nur biologisch abbaubares Material beseitigen lässt, müssen die übrigen Materialien, z.B. Steine, Metalle, Glas und Kunststoffe, in anderer Weise beseitigt werden. Bei der Kompostierung oder Verrottung ist eine Vielzahl verschiedener Mikroorganismen beschäftigt, die abbaubare organische Substanz in mehreren Etappen zu verzehren, wozu Sauerstoff erforderlich ist (aerober Vorgang). Neben der Sauerstoff-Versorgung der gewöhnlich im Freien, d. h. in Mieten erfolgenden Kompostierung beeinflussen weitere Faktoren den Verlauf der Verrottung, z. B. die Qualität der abbaubaren organischen Substanz, die Feuchtigkeit und Temperatur der Miete sowie das Kohlenstoff-Stickstoff-Verhältnis ; der Abbau kann jedoch durch keine Mechanisierung der Anlage beliebig beschleunigt werden. Eine sinnvolle Mechanisierung besteht darin, den Mikroorganismen mit vertretbarem Aufwand möglichst lange gute Abbauverhältnisse zu schaffen. Die Abbaugeschwindigkeit verschiedener Stoffe im Müll ist ungleich, weshalb die Abbaudauer zwischen einigen Tagen und einigen Monaten variieren kann. Grundsätzlich ist die Kompostierung erst mit dem vollständigen Abbau der organischen Substanz abgeschlossen. Dies ist jedoch nicht erforderlich ; der Kompost gilt als reif, wenn er pflanzenverträglich ist, was etwa nach Abbau von ca. 50% der ursprünglichen abbaubaren Masse — entsprechend einer Zeitdauer von etwa 3-7 Wochen bei guten Bedingungen — erreicht wird.

Vor der Lagerung auf dem Kompostierfeld, z. B. einer Miete muß der Müll in verschiedenen Schritten vorbereitet werden, z. B. durch schonendes Zerkleinern, Ausscheiden von Grobteilen, Plastikfetzen od. dgl., Ausscheiden von Eisenteilen und eventuelles Mischen des Mülls mit Klärschlamm. Anschließend wird das Material auf dem Kompostierfeld abgelagert, wo es umgesetzt und belüftet wird.

Die erfindungsgemäße Maschine dient zum Umsetzen- und Belüften- des Materials auf dem Kompostierfeld, z. B. einer Miete.

Es ist ein Kompostierverfahren bekannt (DE-Offenlegungsschrift 1917 268), bei dem das Material auf einer Seite eines Kompostierfeldes oder einer Kompostierzone abgelagert und in Teilschichten weiterbewegt wird, bis es auf der anderen Seite der Zone bzw. des Feldes als Fertigkompost abgeführt wird. Für den Transport des Materials wird ein auf Rädern verfahrbarer Rahmen verwendet, der mindestens zwei Bandförderer entsprechend der Breite der Zone trägt und dem zwei Querförderbänder für den Zu- und Abtransport des Materials zugeordnet sind. Diese Lösung ist jedoch sehr kostenaufwendig und kommt deshalb höchstens bei ganz großen Anlagen in Frage.

Aus EP 21 064 ist ein Verfahren zur Kompostierung bekannnt, bei welchem mit einem rotierendem Förderrad Material aufgenommen und so geworfen wird, dass es über das Förderrad hinausfällt. Damit wird jedoch lediglich ein Umsetzen des Kompostes erreicht, ohne dass hierbei das Material über variable Distanzen verteilt werden könnte.

Aufgabe der Erfindung ist es, eine Maschine der eingangs beschriebenen Art so auszugestalten, dass die Fördereinrichtung der Maschine den Müll mit variablem Umsetzdistanzen verteilen kann.

Diese Aufgabe wird gemäss der Erfindung durch die kennzeichnenden Merkmale des Patentanspruches 1 gelöst.

Die Erfindung umfasst auch eine Anlage zum Aufnehmen, Umsetzen und Verteilen von Müll auf einem Kompostierfeld gemäss den kennzeichnenden Merkmalen des Patentanspruches 4.

Die Erfindung ist in der Zeichnung in einem Ausführungsbeispiel dargestellt und nachfolgend beschrieben. Es zeigen :

Fig. 1 einen schematisch dargestellten Grundriss einer Anlage zur Kompostierung von Müll mit einer Maschine zum Umsetzen und Belüften derselben,

Fig 2 eine schematisch dargestellte Seitenansicht eines Bandschleifenwagens für die Übergabe des herangeführten Frischkompostes auf ein Frischkompost-Absetzgerät,

Fig. 3 einen schematisch dargestellter Grundriß eines Umsetzgerätes zum Aufnehmen, Umsetzen und Verteilen des Kompostes, und

Fig. 4 eine Seitenansicht des Gerätes nach Fig. 3.

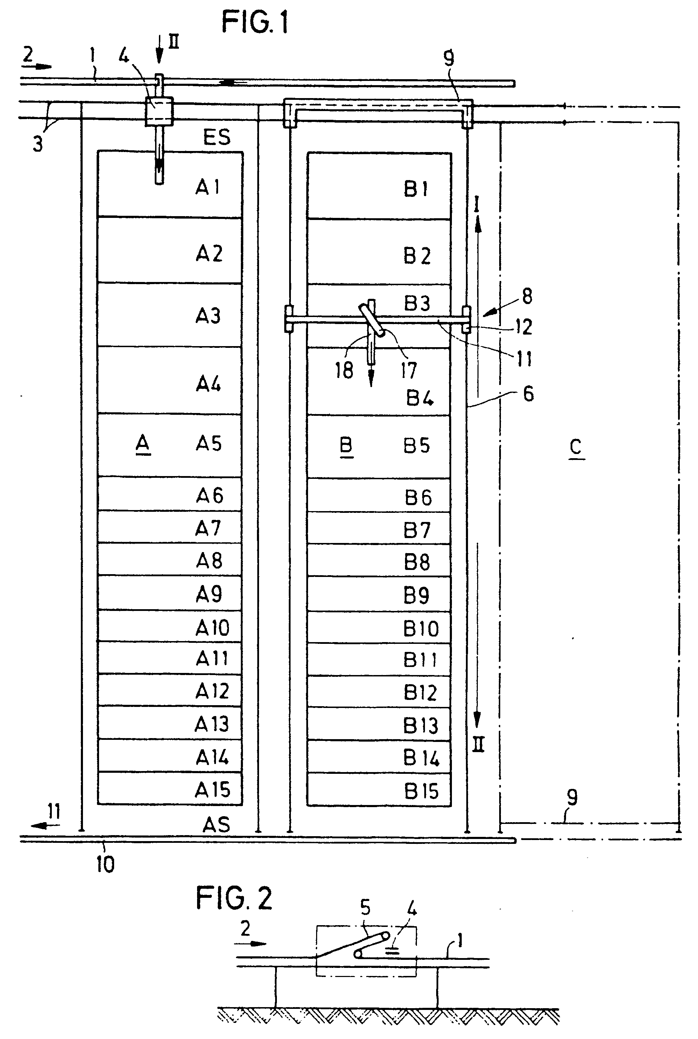

Die erfindungsgemäße Anlage, die am besten anhand von Fig. 1 beschrieben werden kann, weist zwein ebeneinanderliegende Mieten A, B auf, auf denen die Kompostierung des auf der Eintrittsseite ES herangeführten Mülls erfolgt, der als Fertigkompost auf der Austrittsseite AS abgeführt wird. Material, das auf der Eintrttsseite ES deponiert wird, wird schrittweise über die Miete A, B bewegt und belüftet, bis es auf der Austrittsseite AS abgeführt werden kann.

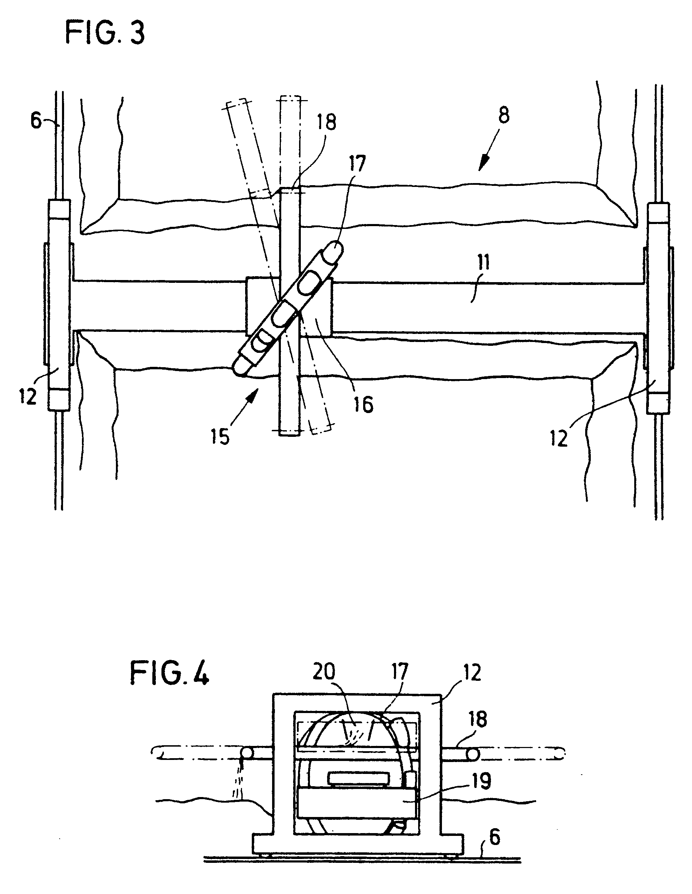

Der als Frischkompost aufgearbeitete Müll wird auf einem Horizontalförderer 1 aus der Pfeilrichtung 2 zu einem auf Schienen 3 hin- und herverfahrbaren Frischkompost-Absetzgerät 4 herangeführt. Das Absetzgerät 4, im wesentlichen ein auf einem Wagen gelagertes Horizontalförderband, verteilt den Frischkompost auf die Mieten A, B in der Nähe der Eintrittsseite ES. Der Übergang des Frischkompostes vom Horizontalförderband 1 auf das Absetzgerät 4 erfolgt mit Hilfe eines verfahrbaren Bandschleifenwagens 5, siehe Fig. 2. Der weitere Transport des Frischkompostes über die Länge der Mieten A, B erfolgt mit Hilfe eines auf Schienen 6 hin- und herverfahrenbaren Umsetzgerätes 8, das anhand von Fig. 3 und 4 im Detail beschrieben wird. Die Pfeilrichtung 1 gibt die Arbeits-Fahrtrichtung des Umsetzgerätes 8 und die Pfeilrichtung II die Richtung des Materialflusses an. Das Umsetzgerät 8 beginnt das Aufnehmen, Umsetzen und Verteilen des Kompostes auf der Austrittsseite AS, so daß es bei der Ankunft auf der Eintrittsseite ES eine leere Zone schafft, die mit neu herangeführtem Frischkompost belegt werden kann.

In Fig. 1 ist noch ein weiteres Feld C angedeutet. Dieses Feld kann gegebenenfalls für die Rückwärtsfahrt, d. h. von der Ein- und Austrittsseite, benützt werden. In diesem Fall muß auch auf der Austrittsseite AS eine Querverschiebeeinrichtung 9 (strichpunktiert angedeutet) vorgesehen werden. Das Feld C kann dann auch als Kompostfilter ausgebildet und vom Umsetzgerät 8 gelegentlich aufgelockert und benetzt werden.

Der Abtransport des Fertigkompostes auf der Austrittsseite AS erfolgt zweckmäßig über ein Transportband in Pfeilrichtung 11, wobei das Beladen des Transportbandes 10 durch das Umsetzgerät 8 erfolgt.

Das in Fig. 3 und 4 dargestellte Umsetzgerät 8 weist eine sich über die Mietenbreite erstreckende Traverse 11 auf, die an ihren Enden durch je einen Ständer 12 begrenzt ist, die ein Fahrwerk (nicht dargestellt) aufweisen, mit dem sie auf den Schienen 6 fahrbar abgestützt sind.

Auf der Traverse 11 ist eine Schaufelradgruppe 15 hin- und herbewegbar angeordnet, die einen Katzwagen 16, ein auf dem Katzwagen 16 angeordnetes Schaufelrad 17 und ein verschiebund schwenkbares Absetz-Transportband 18 aufweist. Wesentlich ist hierbei, daß die Drehachse des Schaufelrades zwar horizontal, jedoch schräg zur Bewegungsrichtung des Umsetzgerätes 8 angeordnet ist und das Absetz-Transportband 18 das Schaufelrad 17 kreuzt. Trotz diesem einfachen Aufbau ist es möglich, alle für das Aufnehmen, Umsetzen und Verteilen des Kompostes von einer Stelle auf eine benachbarte Stelle benötigten Operatioren durchzuführen. Die Schaufelradgruppe 15 kann zudem für das Verladen des Fertigkompostes auf der Austrittsseite AS auf das Transportband 10 und gegebenenfalls auch anstelle des Frischkompost-Absetzgerätes 4 verwendet werden.

Wie aus Fig. 4 ersichtlich ist, ist der Ständer 12 rahmenförmig ausgebildet und die Traverse 11 darin mit einem Joch 19 gelagert. Das Joch 19 kann gegebenenfalls höhenverstellbar, z. B. durch Hydrozylinder, im Ständer 12 angeordnet sein, was erforderlich ist, wenn das Umsetzgerät 8 von der Eintrittsseite ES über das auf der Miete liegende Material auf die Austrittsseite AS zurückkehrt. Bei Verwendung eines dritten Feldes C, siehe Fig. 1, kann auf das Anheben der Traverse 11 verzichtet werden.

Wie aus Fig. 1 ersichtlich ist, sind die Mieten A, B in Teilfelder A1-A15 und B1-B15 unterteilt, wobei die eintrittsseitigen Teilfelder A1-A5 bzw. B1-B5 breiter gewählt sind als die austrittsseitigen Felder A6-A15 bzw. B6-B15. Mit der unterschiedlichen Fläche der Teilfelder wird die Änderung des Sauerstoffbedarfs, des Volumens und der Struktur des Kompostes während der Verrottung berücksichtigt. Durch die Höhe der Miete und die Struktur des Materials wird die Sauerstoff-Versorgung maßgebend beeinflußt. Da der Sauerstoffbedarf in den ersten Wochen der Verrottung viel höher als im späteren Reifeprozess ist, ist deshalb eine kleinere Höhe der Miete vorteilhaft. Nach Abschluß dieser Intensivphase kann eine bessere Platzausnützung erreicht werden, indem die Höhe der Miete vergrößert wird, siehe die flächenmäßig kleineren austrittsseitigen Teilfelder. Auch der Verlust an Volumen wird hierbei berücksichtigt, so daß eine Tagesmenge Müll in der Reifephase etwa 50% weniger Platz benötigt als in der Intensivphase. Je nach Struktur, Feinheit, Reinheit und Feuchte des Kompostes können die Größen der Teilfelder festgelegt und durch das Umsetzgerät optimal bedient werden. Durch eine entsprechende Steuerung ändert das Absetz-Transportband 18 seine Ausladung während des Umsetzens an bestimmten Stellen der Miete und verändert damit die Mietenhöhe und die belegte Grundfläche. Der Betrieb sei anhand der Anlage nach Fig. 1 erläutert. Die Anlage arbeitet während 4 Tagen/ Woche im 1 -Schicht-Betrieb :

a) Am Montagmorgen startet das Umsetzgerät 8 beim Teilfeld A15 und transportiert den reifen Kompost auf das Fertigkompost-Transportband 10 zur Aufbereitung.

b) Am Montagabend hat das Umsetzgerät 8 das Teilfeld A15 geräumt, beginnt nun mit dem Teilfeld A14 und verteilt das Material im leergewordenen Feld A15. Das Umsetzgerät 8 arbeitet sich während der Nacht auf diese Weise durch die Teilfelder A13, A12... A1. Am Ende der Nacht liegt A1 als einzige Teilfläche der Miete A frei da.

c) Am Dienstagmorgen rollt das Umsetzgerät 8 auf dem Querverschiebewagen 9. Dieser fährt zu Teilfeld B1 und entlädt das Gerät 8, das hier die Traverse 11 hochzieht und nach dem Teilfeld B15 fährt. Hier nimmt das Umsetzgerät 8 den reifen Kompost auf und transportiert ihn auf das rückseitige Transportband 10 zur Aufbereitung. Gleichzeitig beschickt das Frischkompost-Absetzgerät das frei gewordene Teilfeld A1 mit neuem Material.

d) Am Dienstagabend hat das Umsetzgerät 8 das Teilfeld B15 geräumt. Gleichzeitig hat das Absetzgerät 4 das Teilfeld A1 vollständig gefüllt. Das Umsetzgerät 8 arbeitet sich nun durch die Teilfelder B14, B13,... B1. Am Ende der Nacht ist B1 das einzig freie Teilfeld der Miete B.

e) Am Mittwochmorgen fährt das Umsetzgerät 8 mit der Verschiebeeinrichtung nach A1, von dort mit hochgezogener Traverse 11 nach A15 und beginnt wieder wie nach a). Gleichzeitig fährt das Frischkompost-Absetzgerät 4 nach B1 und füllt die Fläche dieses Teilfeldes bis zum Abend vollständig mit neuem Material.

Bei diesem Beispiel erfolgt an jedem zweiten Arbeitstag eine Umsetzung. Jeweils beim 15. Durchgang des Umsetzgerätes wird das Material als Fertigkompost von der Miete entfernt.

Durch die Schaufelradgruppe 15 des Umsetzgerätes 8 wird bei jeder Hin- und jeder Herbewegung ein Streifen des Mietenmaterials abgebaut und durch das Absetz-Transportband 18 auf der Rückseite des Umsetzgerätes 8 wieder deponiert. Um diese Materialverschiebung mit möglichst wenig Umlenkungen zu erreichen, wird das Schaufelrad 17, wie bereits erwähnt, schräg zur Fahrtrichtung angeordnet. Der spitze Winkel zwischen dem Schaufelrad 17 und der Traverse 11 beträgt etwa 45-65°. Dadurch kann das sich durch die Zentrumsöffnung des Schaufelrades 17 erstreckende Absetz-Transportband 18 rechtwinklig zur Traverse 11 nach hinten gerichtet werden ; das vom Schaufelrad 17 geförderte Material fällt im höchsten Punkt aus der gefüllten Schaufel durch einen Schacht 20 (Fig. 4) direkt auf das Absetz-Transportband 18.

Bei dem aus der beschriebenen Anlage abgeführten Fertigkompost ist die vollständige Mineralisierung der abbaubaren organischen Substanz noch nicht abgeschlossen. Dies ist in der Praxis weder notwendig noch erwünscht. Der Kompost gilt als reif, wenn er pflanzenverträglich ist, was der Fall ist, sobald etwa 50% der ursprünglich abbaubaren organischen Masse verrottet sind. Bei guten Bedingungen dauert dies etwa 3-7 Wochen. Der weitere Abbau des Fertigkompostes erfolgt durch Bodenmikroorganismen, denen er als Nahrung dient. Die Endprodukte und die Tätigkeit der Bodenmikroorganismen verbessen die Bodeneigenschaften und bewirken eine Wachstumsförderung.

Die beschriebene Anlage kann natürlich anstelle von im Freien gelegenen Mieten auch in Hallen verwirklicht werden, wo der Kompost in Mulden gelagert ist.

## Patentansprüche

1. Maschine zum Aufnehmen, Umsetzen und Verteilen von Müll auf einem Kompostierfeld (A, B), ben welcher das auf der Eintrittseite (ES) des Kompostierfeldes abgelagerte Material ben fortschreitender Verrottung durch ein Umsatzgerät (8) umgesetzt und bis zur Austrittseite (AS) verlagert wird, wo der Abtransport des Fertigkompostes erfolgt, wobei das Umsatzgerät eine über eines der Kompostierfelder verfahrbare Brücke (11) mit zwei auf Schienen (6) verfahrbaren Ständern (12) und einer die Ständer verbindenden Traverse (11) sowie einen auf der Traverse hin- und herbewegbaren Katzwagen (16) mit einer darauf abgestützten, mit einem Förderrad (17) mit horizontaler Drehachse versehenen Fördereinrichtung (15) aufweist, dadurch gekennzeichnet, dass die Fördereinrichtung (15) als ein die Traverse (11) umfassendes Förderrad (17) ausgebildet ist, das schräg mit spitzem Winkel zur Achse der Traverse angeordnet ist und durch dessen Zentrumsöffnung sich ein Absetz-Transportband (18) erstreckt, das im rechten Winkel zur Traverse (12) angeordnet und um eine Vertikalachse schwenkbar sowie in Förderrichtung bezüglich des Förderrades (17) verschiebbar ist.

2. Maschine nach Anspruch 1, dadurch gekennzeichnet, dass die Fördereinrichtung (15) mittels der Traverse (11) höheneinstellbar ist, welche in den Ständern (12) höhenverstellbar gelagert ist.

3. Maschine nach Anspruch 1, dadurch gekennzeichnet, dass der Winkel des Förderrades (17) zur Traverse (11) 45°-60° beträgt.

4. Anlage zum Kompostieren von Müll mit einer Maschine nach einem der Ansprüche 1-3 auf einem in Teilfelder unterteilten Kompostierfeld, dadurch gekennzeichnet, dass die Teilfelder auf der Eintrittsseite eine grössere Fläche als auf der Austrittsseite aufweisen und beim Umsetzen und Verteilen des Kompostes mit einer Materialschicht geringerer Schichtstärke als auf der Austrittsseite belegt ist.

## Claims

1. Machine for picking up, turning over and distribution of waste on a composting area (A, B) in which the material deposited on the entry side (ES) of the composting area which continuous composting is turned over by a turnover device (8) and displaced towards the output side (AS), where the transport away of the finished compost takes place, wherein the turnover device has a bridge (11) which can be traversed across one of the composting areas with two side stands (12) traversable on rails (6) and a cross member (11) connecting the side stands as well as a carriage (16) movable to and fro on the cross member with a feed unit (15) supported thereon and provided with a feed wheel (17) with a horizontal turning axis, characterised in that the feed unit (15) is constructed as a feed wheel (17) surrounding the cross member (11), which is arranged obliquely at an acute angle to the axis of the cross member and through the central opening of which a displacement conveyor belt (18) extends which is arranged at a right angle to the cross member (11) and is displaceable swingably about a vertical axis as well as in the feed direction with respect to the feed wheel (17).

2. Machine according to Claim 1, characterised in that the feed unit (15) is height adjustable by means of the cross member (11) which is mounted in height adjustable fashion in the side stands (12).

3. Machine according to Claim 1, characterised in that the angle of the feed wheel (17) to the cross member (11) amounts to 45°-60°.

4. Plant for composting waste with a machine according to one of Claims 1-3 on a composting area sub-divided into partial areas characterised in that the partial areas on the entry side have a greater surface area than on the output cido and, on turning over and distribution of the compost, are loaded with a layer of material of lesser layer thickness than on the output side.

**Revendications**

1. Machine pour saisir, déplacer et répartir des ordures sur un champ de compostage (A, B), pour laquelle la matière déposée sur le côté entrée (ES) du champ de compostage est déplacée par un appareil à déplacer (8) lors de la progression de la décomposition et est transférée vers le côté sortie (AS) à partir duquel est effectué le transport d'évacuation du compost fini, l'appareil à déplacer présentant un pont (11) pouvant se déplacer au-dessus d'un des champs de compostage avec deux supports (12) se déplaçant sur des rails (6) et une traverse (11) reliant les supports, ainsi qu'un chariot mobile (16) pouvant être déplacé suivant un mouvement de va-et-vient sur la traverse, ledit chariot étant muni d'un dispositif de transport (15) supporté par celui-ci, comportant une roue excavatrice (17) montée sur un axe horizontal, caractérisée en ce que le dispositif de transport (15) est réalisé en tant que roue excavatrice (17) entourant la traverse (11), montée oblique en formant un angle aigu par rapport à l'axe de la traverse, et qu'une bande transporteuse à déposer (18) s'étend à travers l'ouverture centrale de ladite roue excavatrice (17), cette bande transporteuse à déposer étant montée à angle droit par rapport à la traverse (11), et en ce qu'elle pivote autour d'un axe vertical, et qu'elle peut être déplacée dans le sens du transport de la roue excavatrice (17).

2. Machine suivant la revendication 1, caractérisée en ce que le dispositif de transport (15) peut être réglé en hauteur au moyen de la traverse (11), logée dans les supports (12) de façon réglable en hauteur.

3. Machine suivant la revendication 1, caractérisée en ce que l'angle de la roue excavatrice (17) est de 45°-60° par rapport à la traverse (11).

4. Installation pour le compostage d'ordures avec une machine selon l'une des revendications 1 à 3 sur un champ de compostage divisé en sous-zones, caractérisée en ce que les sous-zones présentent une surface supérieure du côté entrée que du côté sortie, et en ce que lors du déplacement et de la repartition du compost les sous-zones du côté entrée sont alimentées sur une hauteur inférieure à la couche de matière du côté sortie.

# FIG.1

# FIG. 2

## FIG. 3

## FIG. 4